# EUROPEAN PATENT APPLICATION

(11) **EP 1 990 962 A2**
(43) Date of publication of application: **12.11.2008**
(21) Application number: 08155891.8
(22) Date of filing: 08.05.2008
(51) Int. Cl.: H04L 25/20

(54) **Method and apparatus for re-transmitting Multi-Input Multi-Output (MIMO) broadcasting signals**

(30) Priority: 08.05.2007 KR 20070044696
(71) Applicant: Samsung Electronics Co., Ltd., Yeongtong-gu Suwon-si, Gyeonggi-do (KR)
(72) Inventor: Oh, Ji-sung, Gyeonggi-do (KR)
(74) Representative: Walaski, Jan Filip

(57) **Abstract**

Provided are a method and apparatus for re-transmitting multi-input multi-output (MIMO) broadcasting signals, and more particularly, to a method and apparatus for efficiently re-transmitting MIMO broadcasting signals to a receiving terminal by using an existing cable without installing an additional cable, when a receiver transmits MIMO broadcasting signals to the receiving terminal via a cable. According to an aspect of the present invention, there is provided a method of re-transmitting a MIMO broadcasting signal, the method including restoring an original signal by receiving a MIMO broadcasting signal via a multi-antenna; re-modulating the restored MIMO broadcasting signal; transmitting the re-modulated MIMO broadcasting signal to a receiving terminal via a cable; and demodulating the transmitted MIMO broadcasting signal in the receiving terminal. A MIMO broadcasting signal is re-transmitted, and a radio frequency (RF) signal can be efficiently transmitted via a cable by modulating a plurality of RF signals to a RF broadcasting signal according to the method of the present invention.

## Description

The present invention relates to a method and apparatus for re-transmitting multi-input multi-output (MIMO) broadcasting signals, and more particularly, to a method and apparatus for efficiently transmitting MIMO broadcasting signals from a receiver to a receiving terminal by using an existing cable without installing an additional cable.

A multi-input multi-output (MIMO) transmitting method is applicable to various types of data receiving/transmitting, because the MIMO transmitting method improves a data transmission rate while using the same bandwidth. In particular, the MIMO transmitting method may be applied to terrestrial broadcasting signal receiving/transmitting. In other words, the MIMO broadcasting signals transmitted from a plurality of antennas are received by a plurality of antennas, and the received MIMO broadcasting signals are output through a receiving terminal by a MIMO receiver decoding the received MIMO broadcasting signals.

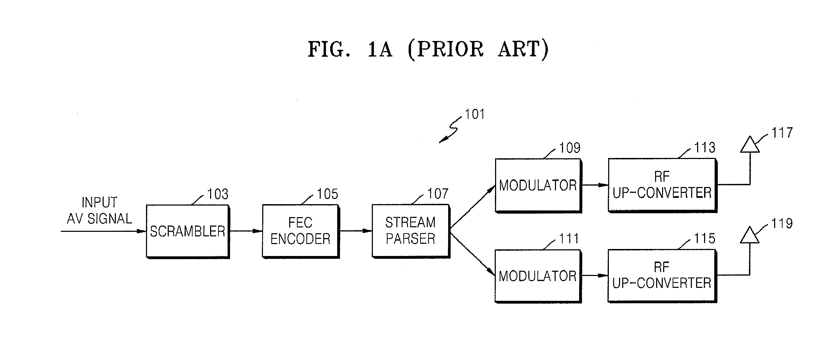

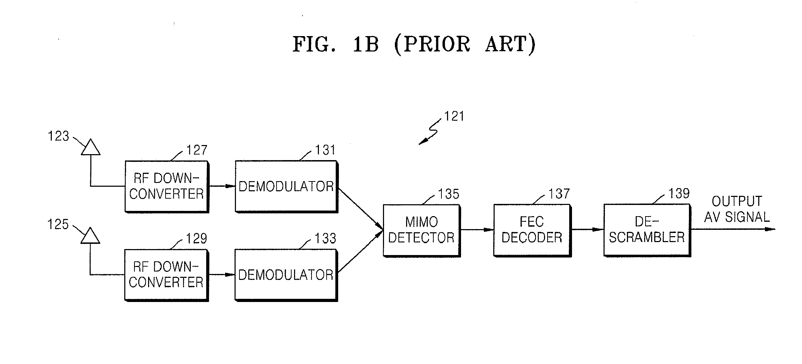

FIGS. 1A and 1B briefly illustrate a MIMO broadcasting transmitter 101 and a MIMO broadcasting receiver 121, respectively, which transmit/receive broadcasting signals by applying a MIMO transmitting/receiving method.

The MIMO broadcasting transmitter 101 illustrated in FIG. 1A includes a scrambler 103, a forward error correction (FEC) encoder 105, a stream parser 107, modulators 109 and 111, radio frequency (RF) up-converters 113 and 115, and multi-antennas 117 and 119.

Audio/video (AV) signals input to the MIMO broadcasting transmitter 101 are sequentially processed through each compositional block of the MIMO broadcasting transmitter 101, transformed to a predetermined frequency domain, and transmitted to the MIMO broadcasting receiver 121.

The scrambler 103 randomizes an input AV data packet so that signal energies are evenly distributed over an entire band. The FEC encoder 105 corrects channel errors. The stream parser 107 maps the broadcasting signals into each antenna of the multi-antennas 117 and 119. Each one of the modulators 109 and 111 modulates the signals mapped to each antenna. The RF up-converters 113 and 115 up-convert the modulated signals mapped to each antenna. Also, the multi-antennas 117 and 119 transmit the up-converted signals to a broadcasting receiver.

The MIMO broadcasting receiver 121 illustrated in FIG. 1B includes multi-antennas 123 and 125, RF down-converters 127 and 129, demodulators 131 and 133, a MIMO detector 135, an FEC decoder 137, and a de-scrambler 139.

The MIMO broadcasting receiver 121 receives the transmitted broadcasting signals by using the multi-antennas 123 and 125. Each one of the multi-receiving-antennas 123 and 125 receives all of a plurality of RF transmitting signals, according to its characteristic as a terrestrial broadcasting channel. Thus, demodulation and decoding cannot be performed separately for each antenna, but all receiving antennas combine received signals and restore the signals to original signals.

The MIMO broadcasting receiver 121 performs an inverse process of the MIMO broadcasting transmitter 101, thereby restoring original signals.

In other words, the multi-antennas 123 and 125 receive the signals transmitted from the transmitter and transfer them to the RF down-converters 127 and 129. The RF down-converters 127 and 129 down-convert the signals transferred from the multi-antennas 123 and 125. The demodulators 131 and 133 demodulate the signals down-converted for each antenna. The MIMO detector 135 restores data by using the signals demodulated for each antenna as the input. The MIMO detector 135 restores the original signals by combining the signals received in the receiving antenna and determines an optimal transmitting symbol by using a characteristic of a channel of the signal received in each antenna. The MIMO detector 135 can be designed in various forms, but in general, it may be embodied in the form of a detector having a maximum likelihood (ML) performance. The FEC decoder 137 corrects data errors which may occur while restoring the data of the MIMO detector 135, and finally, restores an AV broadcasting signal which is the same as a transmitting broadcasting signal. The de-scrambler 139 processes the error-corrected AV broadcasting signal in an inverse process of the process performed in the scrambler 103, and restores the original signal.

In the case of a MIMO system for multi-stream transmission, the number of antennas in the receiver are generally equal to or greater than the number of antennas in the transmitter. However, when using the multi-antenna in order to obtain a diversity effect (for example, using space-time block code), the number of antennas in the receiver may be smaller than the number of antennas in the transmitter.

When using the multi-antenna, the received signal is a plurality of the RF signals including data streams that are different from each other. The plurality of the RF signals is transmitted to the same frequency band at once, thereby improving a transmission rate of all data while using the same channel bandwidth. Thus, re-transmitting the MIMO broadcasting signal according to an embodiment of the present invention is different from a diversity technique improving a signal-to-noise ratio (SNR) in a receiver by transmitting/receiving the same RF signal to/from the multi-antenna.

The method of transmitting/receiving the MIMO broadcasting signal has been selected for various recent wireless communication standards (for example, wireless LAN-IEEE 802.11n, Wibro-IEEE 802.16e), which is evaluated as a significant technique that improves a data transmission rate in the same frequency bandwidth.

Such a method of transmitting/receiving the MIMO broadcasting signal may be used for terrestrial broadcasting allowing a data transmission rate suitable for transmitting broadcasting signals above a high-density (HD) level.

Unlike a wireless local area network (LAN) or a Wibro system employing an MIMO technique, when applying the MIMO technique to a broadcasting system, a problem occurs in signal transmission between a receiving antenna and a terminal (for example, a TV set) via a cable. A method of receiving a broadcasting signal from an antenna and transmitting to a terminal will now be described in detail.

The method of receiving a broadcasting signal from an antenna and transmitting to a terminal can be categorized into 1) receiving a signal with an exterior multi-antenna and transmitting the signal via a cable to a terminal, 2) directly receiving the signal with an interior multi-receiving-antenna attached to the terminal, and 3) a cable broadcasting station which receives terrestrial broadcasting re-transmitting the signal to a user's terminal via the cable.

Method 2) of directly receiving the signal with an interior multi-receiving-antenna attached to the terminal is the same as a method selected for a wireless LAN or a Wibro terminal. A problem with this method is a decrease in a receiving capability caused by using the interior antenna. When re-transmitting an MIMO signal by using a cable, such as in method 1) of receiving a signal with an exterior multi-antenna and transmitting the signal via a cable to a terminal and method 3) of a cable broadcasting station which receives terrestrial broadcasting re-transmitting the signal to a user's terminal via the cable, an additional cable should be installed. In other words, a plurality of cables is required because a plurality of RF signals have to be transmitted to a terminal for a MIMO signal transmission. However, most of current installed cables are single cables, and therefore it is difficult to transmit MIMO signals.

Therefore, it is necessary to adopt a method of efficiently transmitting a plurality of RF signals when transmitting MIMO broadcasting signals to a receiving terminal via a single cable.

The present invention provides a method and apparatus for re-transmitting multi-input multi-output (MIMO) broadcasting signals, which efficiently transmit a plurality of radio frequency (RF) signals when transmitting the MIMO broadcasting signal to a receiving terminal via a single cable.

According to an aspect of the present invention, there is provided a method of re-transmitting a MIMO broadcasting signal, the method including restoring an original signal by receiving a MIMO broadcasting signal via a multi-antenna; re-modulating the restored MIMO broadcasting signal; transmitting the re-modulated MIMO broadcasting signal to a receiving terminal via a cable; and demodulating the transmitted MIMO broadcasting signal in the receiving terminal.

The operation of re-modulating the restored MIMO broadcasting signal may vary according to at least one of a data transmission rate of a MIMO broadcasting signal, a capacity of a cable, and a transmission method of the MIMO broadcasting signal via a cable.

If the data transmission rate of a MIMO broadcasting signal is small enough to be covered by one cable channel, the MIMO broadcasting signal may be transmitted via one cable channel, and if the data transmission rate of a MIMO broadcasting signal is too large to be covered by one cable channel, the MIMO broadcasting signal may be transmitted via a plurality of cable channels.

If the capacity of a cable is large enough to cover a transmission of the MIMO broadcasting signal, the MIMO broadcasting signal may be transmitted via one cable, if the capacity of a cable is too small to cover a transmission of the MIMO broadcasting signal, the MIMO broadcasting signal may be transmitted via a plurality of cables.

If the transmission method of the MIMO broadcasting signal is a method transmitting the signal by classifying broadcasting data, data in a particular class may be selectively transmitted via a cable.

According to another aspect of the present invention, there is provided a computer-readable medium having embodied thereon a computer program for executing the methods of re-transmitting the MIMO broadcasting signals.

According to another aspect of the present invention, there is provided an apparatus for re-transmitting a MIMO broadcasting signal, the apparatus including a MIMO broadcasting receiver restoring an original signal by receiving the MIMO broadcasting signal via a multi-antenna; a re-modulator re-modulating the restored MIMO broadcasting signal; and a receiving terminal receiving and demodulating the re-modulated MIMO broadcasting signal via a cable.

The constitution of the re-modulator may be changed according to at least one of a data transmission rate of a MIMO broadcasting signal, a capacity of a cable, and a transmission method of the MIMO broadcasting signal via a cable.

If the data transmission rate of a MIMO broadcasting signal is small enough to be covered by one cable or if the capacity of a cable is large enough to cover a transmission of the MIMO broadcasting signal, the re-modulator may include a preprocessor re-packetizing the MIMO broadcasting signal input from the MIMO broadcasting receiver; a forwarded error correction (FEC) encoder correcting re-transmission errors of the MIMO broadcasting signal; a modulator re-modulating the MIMO broadcasting signal; and a RF up-converter up-converting the re-modulated MIMO broadcasting signal to an RF frequency band usable in a cable.

If the data transmission rate of a MIMO broadcasting signal is too large to be covered by one cable channel or if the capacity of a cable is too small to cover a transmission of the MIMO broadcasting signal, the re-modulator may include a preprocessor re-packetizing the MIMO broadcasting signal input from the MIMO broadcasting receiver; an FEC encoder correcting re-transmission errors of the MIMO broadcasting signal; a stream parser mapping the MIMO broadcasting signal to a plurality of cables; a plurality of modulators re-modulating each signal of the plurality of the parsed MIMO broadcasting signals; a plurality of RF up-converters up-converting the plurality of the re-modulated MIMO broadcasting signal to an RF frequency band usable in the plurality of cables.

If the transmission method of the MIMO broadcasting signal is a method transmitting the signal by classifying broadcasting data, the re-modulator may include a stream retriever selectively extracting data in a particular class from among the MIMO broadcasting signals input from the MIMO broadcasting receiver; a preprocessor re-packetizing the extracted MIMO broadcasting signal; an FEC encoder correcting re-transmission errors of the MIMO broadcasting signal; a modulator re-modulating the MIMO broadcasting signal; and an RF up-converter up-converting the re-modulated MIMO broadcasting signal to an RF frequency band usable in the cable.

The extracted data in a particular class may be data having a low picture quality.

The above and other features and advantages of the present invention will become more apparent by describing in detail exemplary embodiments thereof with reference to the attached drawings in which:
FIGS. 1A and 1B briefly illustrate a multi-input multi-output (MIMO) broadcasting transmitter and a MIMO broadcasting receiver, respectively, which transmit/receive broadcasting signals by applying a MIMO transmitting/receiving method;
FIG. 2 illustrates a broadcasting system re-transmitting MIMO broadcasting signals from a broadcasting receiver when transmitting/receiving MIMO broadcasting signals between a MIMO broadcasting transmitter and a MIMO broadcasting receiver;
FIG. 3 is a flowchart illustrating a method of re-transmitting MIMO broadcasting signals from a broadcasting receiver when transmitting/receiving MIMO broadcasting signals between a MIMO broadcasting transmitter and a MIMO broadcasting receiver;
FIG. 4 illustrates a structure of a re-modulator employing a method of transmitting MIMO broadcasting signals via a single cable channel according to an embodiment of the present invention;
FIG. 5 illustrates a structure of a re-modulator employing a method of transmitting MIMO broadcasting signals via a plurality of cable channels according to an embodiment of the present invention;
FIG. 6 illustrates a structure of a re-modulator employing a method of transmitting MIMO broadcasting signals by classifying the MIMO broadcasting signals according to an embodiment of the present invention;
FIG. 7 illustrates a broadcasting signal (bit stream) before and after re-modulation by the re-modulator illustrated in FIG. 4 according to an embodiment of the present invention.

The present invention will now be described more fully with reference to the accompanying drawings, in which exemplary embodiments of the invention are shown.

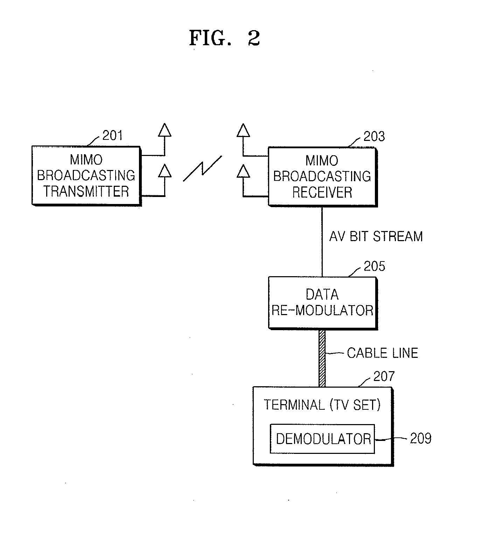

FIG. 2 illustrates a broadcasting system re-transmitting multi-input multi-output (MIMO) broadcasting signals from a broadcasting receiver when transmitting/receiving MIMO broadcasting signals between a MIMO broadcasting transmitter 201 and a MIMO broadcasting receiver 203.

The MIMO broadcasting transmitter 201 is an apparatus in a broadcasting station transmitting terrestrial broadcasting signals by using a multi-antenna. A detailed explanation of a structure of the MIMO broadcasting transmitter 201 was previously explained with reference to the prior art, and therefore a detailed explanation thereof will be omitted here. The MIMO broadcasting receiver 203 receives MIMO signals by using an exterior multi-antenna at home or at a cable broadcasting station, and then restores a broadcasting signal. A detailed explanation of a structure of the MIMO broadcasting receiver 203 was also previously explained with reference to the prior art, and therefore a detailed explanation thereof will be omitted here. A data re-modulator 205 re-modulates the restored broadcasting signal to a signal suitable for cable re-transmission. Also, a terminal (for example, a TV set) 207 receives the signal re-transmitted from the data re-modulator 205 via a cable, and displays the signal by restoring an original signal, including a demodulator for restoring the original signal.

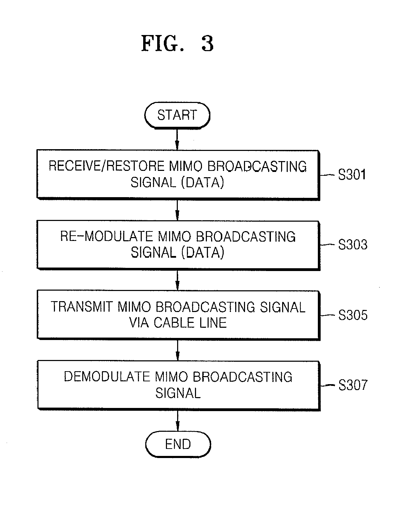

FIG. 3 is a flowchart illustrating a method of re-transmitting MIMO broadcasting signals from a broadcasting receiver when transmitting/receiving MIMO broadcasting signals between a MIMO broadcasting transmitter and a MIMO broadcasting receiver.

MIMO broadcasting signals are received via a multi-antenna and the original signal is restored (operation S301). The restored MIMO broadcasting signal is re-modulated (operation S303). The re-modulated MIMO broadcasting signal is transmitted to a receiving terminal via a cable (operation S305). The transmitted MIMO broadcasting signal is demodulated in the receiving terminal (operation S307).

In operation S301, the restoring of the original signal by receiving the MIMO broadcasting signal via a multi-antenna restores the original signal by performing an inverse process of the process performed by the MIMO broadcasting transmitter. In other words, the signal transmitted from the transmitter is received for each antenna and down-converted, and the signal down-converted for each antenna is demodulated. Then, data is restored by using the input signal demodulated for each antenna. At this time, the optimal transmission symbol is determined by using a characteristic of a channel of the signal received in the antenna. The original audio/video (AV) signal is generated by processes, such as forward error correction (FEC) decoding which restores an AV signal that is the same as the transmitted signal by correcting data errors that might occur while restoring data or descrambling which restores an original signal by performing an inverse process of the process in which the AV signal was processed in a scrambler.

In operation S303, re-modulating of the MIMO broadcasting signal may be executed in various ways according to a transmission rate of a broadcasting signal, a status of a cable channel (a number of users using a cable channel, a cable capability, a length of a cable, the number of cables, and a quality of a cable), and a transmission method of a broadcasting signal.

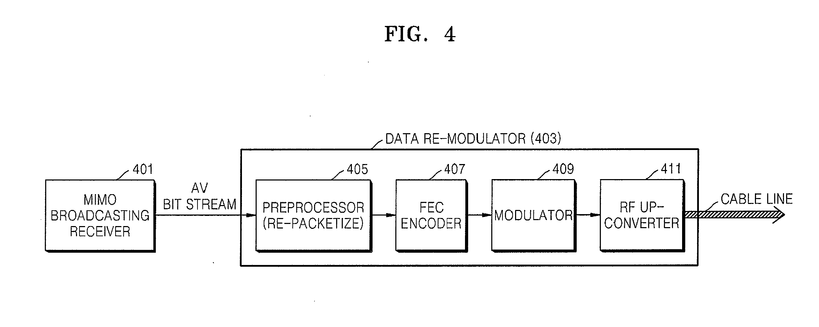

FIG. 4 illustrates a structure of a re-modulator 403 employing a method of transmitting MIMO broadcasting signals via a single cable channel, when a data transmission rate of a MIMO broadcasting signal is small enough to be covered by one cable channel or a capacity of a cable is large enough to cover a MIMO broadcasting signal transmission.

The re-modulator 403 employing the above-described method includes a preprocessor 405 re-packetizing a MIMO broadcasting signal input from a MIMO broadcasting receiver 401, an FEC encoder 407 correcting re-transmission errors of the MIMO broadcasting signal, a modulator 409 re-modulating the MIMO broadcasting signal, and a radio frequency (RF) up-converter 411 up-converting the re-modulated MIMO broadcasting signal to a RF frequency band which is usable in a cable.

Examples of the method will be explained with reference to a quadrature amplitude modulation (QAM) method which is widely applied in digital cable broadcasting. In the case where two MIMO transmitted RF signals are modulated to 16-QAM respectively, the signals may be re-transmitted to 256-QAM on a cable when re-transmitting. In this case, when the signal output from the MIMO broadcasting receiver is input to the data re-modulator 403, the data re-modulator executes processes, such as preprocessing which re-packetizes the signal to make it easy to re-transmit on a cable, FEC encoding which corrects re-transmission errors, and QAM modulation (modulating 16-QAM to 256-QAM), and then up-converts the signal to an RF frequency band that is usable in a cable.

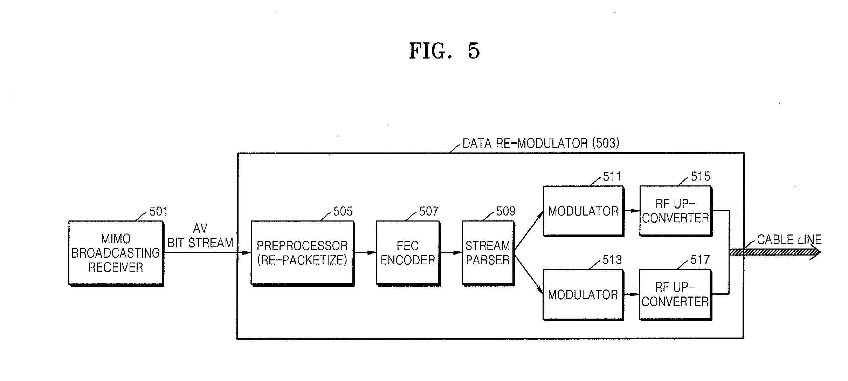

FIG. 5 illustrates a structure of a re-modulator 503 employing a method of transmitting MIMO broadcasting signals via a plurality of cable channels, when a data transmission rate of a MIMO broadcasting signal is too large to be covered by one cable channel or a capacity of a cable is too small to cover a MIMO broadcasting signal.

The re-modulator 503 employing the method includes a preprocessor 505 re-packetizing a MIMO broadcasting signal input from a MIMO broadcasting receiver 501, an FEC encoder 507 correcting re-transmission errors of the MIMO broadcasting signal, a stream parser 509 mapping the MIMO broadcasting signal to a plurality of cables, a plurality of modulators 511 and 513 re-modulating each signal of the plurality of parsed MIMO broadcasting signals, and a plurality of RF up-converters 515 and 517 up-converting the plurality of the re-modulated MIMO broadcasting signals to an RF frequency band usable in a cable.

The method will be explained with reference to a QAM method which is widely applied in digital cable broadcasting. In the case where two MIMO transmitted RF signals are modulated to 64-QAM respectively, although the signals should be re-transmitted to 4096-QAM on a cable when re-modulating, generally a cable channel does not provide sufficient capacity. In this case, a data re-modulator executes FEC encoding on the MIMO broadcasting signal input from the MIMO broadcasting receiver, attempts streaming parsing, and separates the MIMO broadcasting signal into a plurality of data streams. Then, the data re-modulator re-transmits the signal by performing QAM modulation (modulating 64-QAM to 4096-QAM) and RF up-conversion for each data stream. Here, a plurality of RF channels is selected on a cable, and the channels should be transmitted to a data demodulator in a terminal (for example, a TV set) without interference. In this case, a frequency bandwidth being used is doubled.

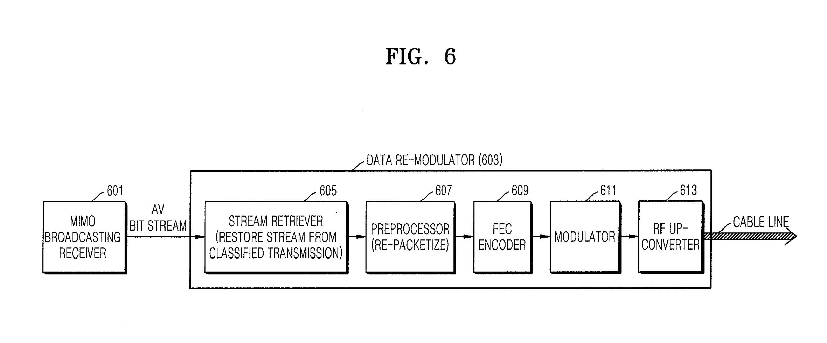

FIG. 6 illustrates a structure of a re-modulator 603 employing a method of transmitting MIMO broadcasting signals by classifying the MIMO broadcasting signals.

The re-modulator 603 employing the method includes a stream retriever 605 selectively extracting data in a particular class from among MIMO broadcasting signals input from a MIMO broadcasting receiver 601, a preprocessor 607 re-packetizing the extracted MIMO broadcasting signal, an FEC encoder 609 correcting re-transmission errors of the MIMO broadcasting signal, a modulator 611 re-modulating the MIMO broadcasting signal, and an RF up-converter 613 up-converting the re-modulated MIMO broadcasting signal to an RF frequency band usable in a cable.

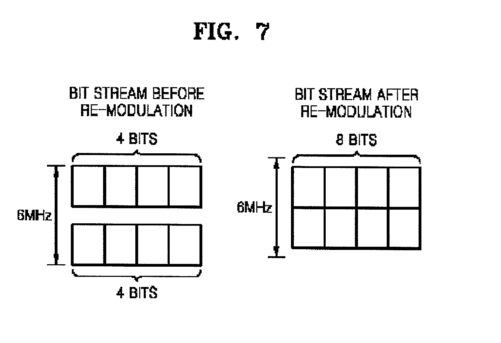

FIG. 7 illustrates a broadcasting signal (a bit stream) before and after re-modulation by the re-modulator 603 illustrated in FIG. 6. When bit-streams of AV data having a low picture quality and bit-streams of AV data having a high picture quality are transmitted via a bandwidth of 6 Mhz, if broadcasting data is classified and transmitted, and if there is no problem in transmitting only a particular class, data in a particular class (for example, AV data having a low picture quality) may be selected for re-transmission.

According to the present invention, a plurality of RF signals transmitted via a plurality of antennas is received/demodulated and re-modulated. Accordingly, an RF signal can be efficiently transmitted via a cable by modulating a plurality of RF signals to an RF signal. Thus, by using the method and apparatus according to the present invention, it is possible to provide high quality high-density (HD) broadcasting by using an existing cable and a receiving terminal such as a TV set without installing an additional cable.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of re-transmitting a multi-input multi-output (MIMO) broadcasting signal, the method comprising:
restoring an original signal by receiving a MIMO broadcasting signal via a multi-antenna;
re-modulating the restored MIMO broadcasting signal;
transmitting the re-modulated MIMO broadcasting signal to a receiving terminal via a cable; and
demodulating the transmitted MIMO broadcasting signal in the receiving terminal.

2. The method of claim 1, wherein the operation of re-modulating the restored MIMO broadcasting signal varies according to at least one of a data transmission rate of a MIMO broadcasting signal, a capacity of a cable, and a transmission method of the MIMO broadcasting signal via a cable.

3. The method of claim 2, wherein if the data transmission rate of a MIMO broadcasting signal is small enough to be covered by one cable channel, the MIMO broadcasting signal is transmitted via one cable channel, and
if the data transmission rate of a MIMO broadcasting signal is too large to be covered by one cable channel, the MIMO broadcasting signal is transmitted via a plurality of cable channels.

4. The method of claim 2, wherein if the capacity of a cable is large enough to cover a transmission of the MIMO broadcasting signal, the MIMO broadcasting signal is transmitted via one cable, and
if the capacity of a cable is too small to cover a transmission of the MIMO broadcasting signal, the MIMO broadcasting signal is transmitted via a plurality of cables.

5. The method of claim 2, wherein if the transmission method of the MIMO broadcasting signal is a method for transmitting the signal by classifying broadcasting data, data in a particular class is selectively transmitted via a cable.

6. A computer-readable medium having embodied thereon a computer program for executing the method of any one of claims 1 through 5.

7. An apparatus for re-transmitting a MIMO broadcasting signal, the apparatus comprising:
a MIMO broadcasting receiver for restoring an original signal by receiving the MIMO broadcasting signal via a multi-antenna;
a re-modulator for re-modulating the restored MIMO broadcasting signal; and
a receiving terminal for receiving and demodulating the re-modulated MIMO broadcasting signal via a cable.

8. The apparatus of claim 7, wherein a structure of the re-modulator is changed according to at least one of a data transmission rate of a MIMO broadcasting signal, a capacity of a cable, and a transmission method of the MIMO broadcasting signal via a cable.

9. The apparatus of claim 8, wherein if the data transmission rate of a MIMO broadcasting signal is small enough to be covered by one cable or if the capacity of a cable is large enough to cover a transmission of the MIMO broadcasting signal, the re-modulator further comprises:
a preprocessor for re-packetizing the MIMO broadcasting signal input from the MIMO broadcasting receiver;
a forward error correction (FEC) encoder for correcting re-transmission errors of the MIMO broadcasting signal;
a modulator for re-modulating the MIMO broadcasting signal; and
a radio frequency (RF) up-converter for up-converting the re-modulated MIMO broadcasting signal to an RF frequency band usable in a cable.

10. The apparatus of claim 8, wherein if the data transmission rate of a MIMO broadcasting signal is too large to be covered by one cable channel or if the capacity of a cable is too small to cover a transmission of the MIMO broadcasting signal, the re-modulator further comprises:
a preprocessor for re-packetizing the MIMO broadcasting signal input from the MIMO broadcasting receiver;
an FEC encoder for correcting re-transmission errors of the MIMO broadcasting signal;
a stream parser for mapping the MIMO broadcasting signal to a plurality of cables;
a plurality of modulators for re-modulating each signal of the plurality of the parsed MIMO broadcasting signals; and
a plurality of RF up-converters for up-converting the plurality of the re-modulated MIMO broadcasting signal to an RF frequency band usable in the plurality of cables.

11. The apparatus of claim 8, wherein, if the transmission method of the MIMO broadcasting signal is a method transmitting the signal by classifying broadcasting data, the re-modulator further comprises:
a stream retriever for selectively extracting data in a particular class from among the MIMO broadcasting signals input from the MIMO broadcasting receiver; a preprocessor re-packetizing the extracted MIMO broadcasting signal;
an FEC encoder for correcting re-transmission errors of the MIMO broadcasting signal;
a modulator for re-modulating the MIMO broadcasting signal; and
an RF up-converter for up-converting the re-modulated MIMO broadcasting signal to an RF frequency band usable in the cable.

12. The apparatus of claim 11, wherein the extracted data in a particular class is data having a low picture quality.
